# EUROPEAN PATENT SPECIFICATION

(11) **EP 0 738 568 B1**
(45) Date of publication and mention of the grant of the patent: **27.02.2002**
(21) Application number: 95120393.4
(22) Date of filing: 22.12.1995
(51) Int. Cl.: B26D 7/26, F16C 13/02

(54) **Constraint system for parallel cantilever shafts**
Haltevorrichtung für parallele freitragende Wellen
Dispositif de contrainte pour arbres parallèles montés en porte à faux

(30) Priority: 14.02.1995 US 388015; 14.02.1995 US 388087
(43) Date of publication of application: 23.10.1996
(60) Divisional application: 00122492.2
(73) Proprietor: EASTMAN KODAK COMPANY, Rochester, New York 14650-2201 (US)
(72) Inventor: Fuss, Fred M., c/o Eastman Kodak Company, Rochester, New York 14650-2201 (US); Mesolella, John A., c/o Eastman Kodak Company, Rochester, New York 14650-2201 (US)
(74) Representative: Lewandowsky, Klaus, Dipl.-Ing.

(56) References cited:
- EP-A- 0 103 122
- WO-A-92/17641
- DE-A- 4 217 560
- DE-U- 8 708 444
- GB-A- 901 717
- GB-A- 2 273 287
- US-A- 1 355 060
- US-A- 3 580 648
- US-A- 3 957 319
- US-A- 4 423 612
- US-A- 4 984 910

## Description

### Technical Field

The invention concerns improvements to rotary equipment such as punchers, slitters, embossers, scalers and the like in which cooperating rotating tools are mounted on cantilever shafts for acting on a work piece that passes between the rotating tools. More particularly, the invention relates to a constraint system for minimizing deflection of such cantilever shafts, without providing an over constraint, which could result in damage to components such as tools, shafts and bearings.

### Background Art

In apparatus such as rotary punchers, slitters, embossers, sealers and the like, which involve the use of a pair of cooperating rotary tools, the tools frequently have been mounted on outboard ends of driven cantilever shafts, to facilitate thread up of the work piece, maintenance of the equipment and the like. A problem with such apparatus has been that the ends of the cantilever shafts tend to deflect or flex slightly. Such deflection can lead to premature wear of the tools; and to incomplete or irregular punching, slitting, embossing or sealing. These problems in turn can require frequent shut down of the apparatus for adjustment, replacement of worn and broken parts and other repairs made necessary by such deflection of the cantilever shafts.

One solution attempted for such problems has been to provide, rigidly attached to the frame of the apparatus, an additional rotary support for the free end of each cantilever shaft. Aside from the difficulty of threading up and maintaining such an apparatus, the additional support may over constrain the shaft; so that, errors in alignment can cause high stresses on shafts, bearings and tools, leading ultimately to failures. Another solution is described in U.S. Patent 186,109 which shows half journal bearings mounted inboard of the tools from the ends of the cantilever shafts. This arrangement over constrains the shafts and would be expected to lead to early failure of the half journals. U.S. Patent 4,485,710 shows a paper cutting machine in which movement of non-cantilever shafts in low precision bearings is minimized by a bearing unit supported between a pair of non-cantilever shafts. U.S. Patent 4,770,078 shows a cutting and scoring apparatus in which tools mounted on cantilever shafts are prevented from moving by rollers mounted in the frame of the apparatus. This arrangement also results in over constraint of the shafts and tools.

Thus, a need has existed for a solution to the problem of controlling movement of tool mounted on cantilever shafts, without over constraining the shafts, tools or supporting bearings. A need has also existed for a solution to the problem of controlling run-out of the supporting bearings, which can contribute to movement of the tools.

US-A-4,423,612, which is regarded as the closest prior art, discloses a dual bearing bracket comprising identical hillow block type bearing housings. Each is mounted and secured on the end of a cantilevered roll shaft of a rolling mill. The housings are connected by bolts, which, when tightened, draw the housings toward each other until the alignement of the cantilevered roll shafts is achieved.

### Summary of the Invention

The primary object of the invention is to provide a technique for minimizing movement of rotary tools mounted on cantilever shafts, but without providing an over constraint

Another objective is to provide such a technique without appreciably reducing the harmonic frequencies of the associated apparatus.

Still another objective of the invention is to provide such a technique which can accommodate a substantial degree of runout of a pair of cantilever shafts.

These objectives are achieved by a system as defined by claim 1, which defines the invention.

These objectives are given only by way of illustrative examples; thus other desirable objectives and advantages inherently achieved by the invention may occur or become apparent to those skilled in the art. The scope of the invention is to be limited only by the appended claims.

The invention is particularly useful in an apparatus including a pair of parallel shafts having cantilever portions and a pair of cooperating tools each mounted on a respective cantilever portion, the shafts being mounted for rotation in the apparatus during use of the tools. The tools may be rotary punchers, slitters, embossers, sealers and the like. In accordance with the invention, such apparatus is improved by including first and second bearings each mounted on a respective cantilever portion outboard of a respective one of the cooperating tools. Uniquely in accordance with the invention, a tuned compliance or constraint member is supported by the first and second bearings, the constraint member including a first body portion with a first bore within which the first bearing is located, a second body portion with a second bore within which the second bearing is located and at least one flexure extended between the first and second body portions, the flexure being effective for limiting deflection of the cantilever portions. The first and second bores may be through bores or blind bores. The flexure permits limited movement of the cantilever portions, without providing an over constraint which could lead to damage to bearings, shafts and tools. By appropriately selecting the geometry and material of the flexure, the constraint member, in effect, can be tuned to provide the desired flexibility or compliance for a particular application.

In one embodiment, the flexure has a major width dimension measured essentially parallel to axes of rotation of the shafts, a minor width dimension measured essentially transverse to the axes of the shafts and a length between the first and second body portions. There may be several flexures, a central flexure located in a plane containing axes of rotation of the cantilever shafts and side flexures on opposite sides of the central flexure. The side flexures may be angled toward each other. Preferably, the flexure(s) and the body portions are formed integrally. In instances where further limiting movement of the constraint member is desired, the assembly on the apparatus that involves the pair of cooperating tools may include means for limiting radial movement of the constraint member. Each of the parallel cantilever shafts may comprise an inboard cantilever portion which supports a respective one of the tools and a separate, outboard lever portion which is supported by the respective tool, each bearing being mounted on a respective separate, outboard cantilever portion.

To enable the positions of the bearings to be adjusted precisely on their respective shafts, a lock nut is threaded onto an outboard end of each cantilever portion and engaged with a respective bearing. The lock nut may include a body portion with a central threaded bore, a plurality of circumferentially spaced, threaded through bores essentially parallel to an axis of rotation of the lock nut; and a corresponding plurality of screws in the threaded bores, at least one of the screws being adjustably engaged with the respective bearing. Brass contact plugs may be provided between the screws and the bearings. Since the bearings each have an inner race and an outer race, the lock nut preferably engages the inner race. The lock nut also may include a further plurality of circumferentially spaced, threaded through bores extended radially toward the axis of rotation of the lock nut; a corresponding further plurality of radially movable, threaded shoes; and a corresponding further plurality screws in the further plurality of through bores for pressing the shoes against the cantilever portion. The invention may include a pair of housings, one housing surrounding each bearing, each housing having a circumferentially and radially extending flange for engaging the constraint member around a respective one of the first and second bores, there being substantial radial clearance between the housings and the respective bores, and the constraint member being fastened to the radially extending flange. The lock nut may be used to adjust the positions of the housings to greatly reduce radial and axial runout and to ensure ready installation of the constraint member.

The invention provides numerous significant advantages. Because of the presence of the constraint member, the stiffness or rigidity of the rotary system is increased substantially, which minimizes the relative movement of the tools and leads to improved punching, slitting, embossing, sealing and the like. Tool wear is more uniform along the axis of rotation of the tool. The tools also are able to act effectively on materials having higher shear strengths, since movement apart by the tools is greatly reduced. Higher speeds of operation frequently are achievable. The constraint member acts as a damper for the independent vibrations of the cantilever shafts. By proper selection of the material, geometry and number of the flexures, the stiffness or compliance of the constraint member can be tuned to each particular application. Existing apparatus may be modified readily by installing the constraint system outboard of tools already mounted on cantilever shafts.

### Brief Description of the Drawings

The foregoing and other objectives, features and advantages of the invention will be apparent from the following more particular description of the invention, as illustrated in the accompanying drawings.
Figure 1 shows a front elevation view of an apparatus embodying the invention.
Figure 2 shows a sectional view taken along line 2-2 of Figure 1.
Figure 3 shows a perspective view of a constraint member.
Figure 4 shows a plan view of a lock nut.
Figure 5 shows a sectional view along line 5-5 of Figure 4.

### Description of the Preferred Embodiments

The following is a detailed description of the invention, reference being made to the drawings in which the same reference numerals-identify the same elements of structure in each of the several Figures.

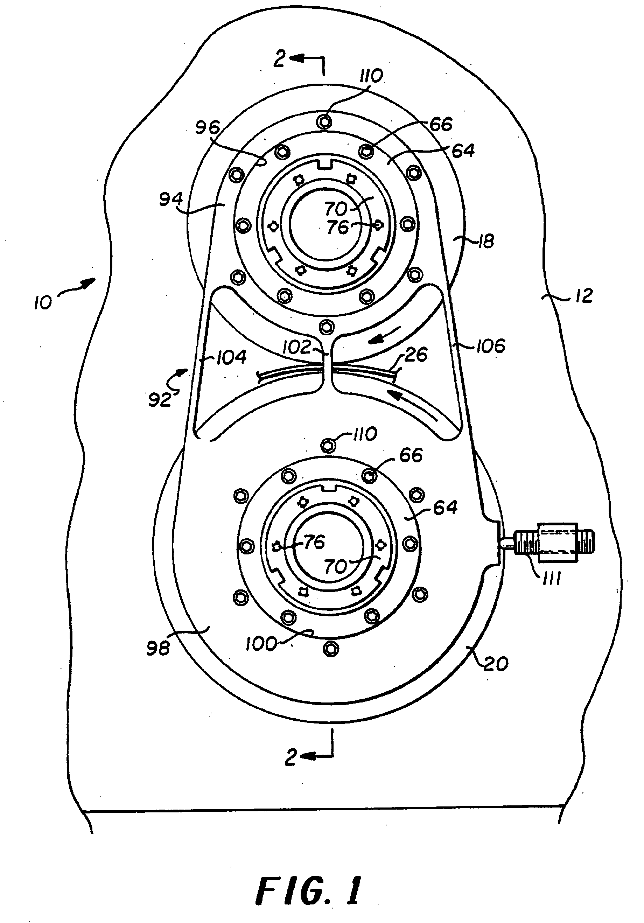

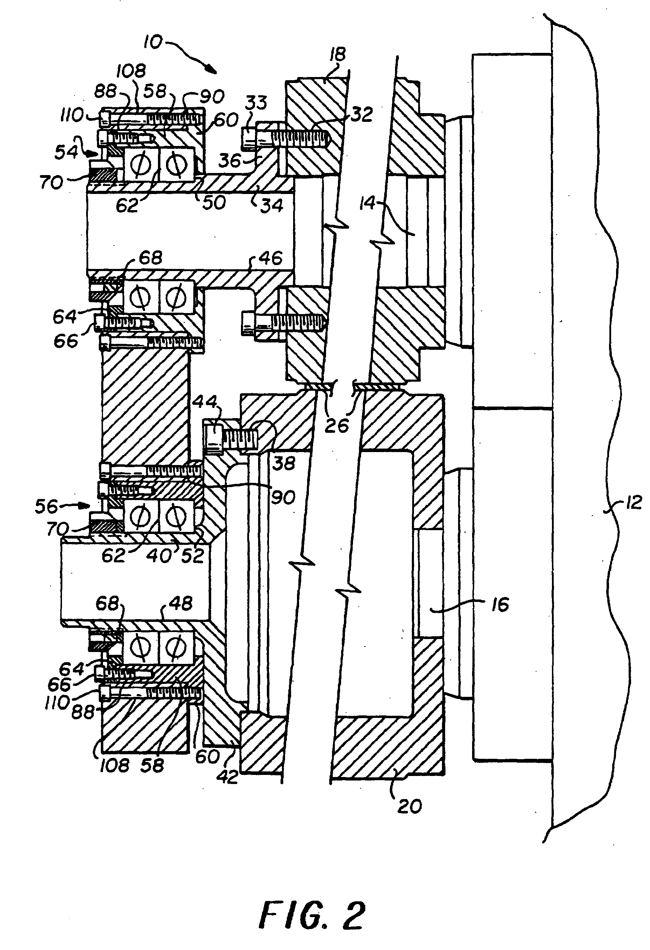

Referring to Figures 1 to 3, the invention is particularly useful in an apparatus 10 which includes a drive module 12 from which extends a pair of cantilever shafts 14, 16 which are rotated by module 12 during operation. In the illustrated apparatus, a rotary tool 18 is fixedly mounted for rotation with shaft 14 and a cooperating rotary tool 20 is fixedly mounted for rotation with shaft 16. Those skilled in the art will understand that the invention may be applied to rotary equipment which includes a wide variety of rotary, cooperating tools, such as those used in punchers, slitters, embossers, sealers, printers, calendaring rolls, web choppers and the like. In the familiar manner, a work piece 26, such as an elongated strip or strips of material, is drawn between the rotating tools to be punched, slit, embossed, sealed or to undergo whatever transformation can be completed with such rotary tools.

Rotary tool 18 is provided with a circumferential array of threaded holes 32. A cantilever shaft extension 34, having a circumferentially and radially extending flange 36, is mounted on tool 18 by screw 33 extended into hole 32. Similarly, rotary tool 20 is provided with a circumferential array of tapped holes 38. A cantilever shaft extension 40, having a radially extending flange 42, is mounted to tool 20 by a plurality of screws 44. Alternatively, shafts 14, 16 may be enlarged and extended through tools 18, 20, respectively. To minimize the mass and maximize the resonant frequency of the overall assembly, shaft extensions 34, 40 preferably are provided with respective central bores 46, 48. Shaft extensions 34, 40 include respective shoulders 50, 52. Mounted against the shoulders are bearing assemblies 54, 56, each of which includes a cylindrical housing 58 having a radially and circumferentially extending flange 60 and surrounding a duplex bearing 62. Assemblies 54, 56 are fitted onto the shaft extensions against shoulders 50, 52. A retainer ring 64 is mounted into each housing 58 into contact with the outer race of bearing 62. A plurality of screws 66 secure each ring 64 to its respective housing 58. A hardened washer 68 is positioned on each shaft extension against the inner race of bearing 62. A lock nut 70 is threaded onto the end of each shaft extension and into engagement with washer 68.

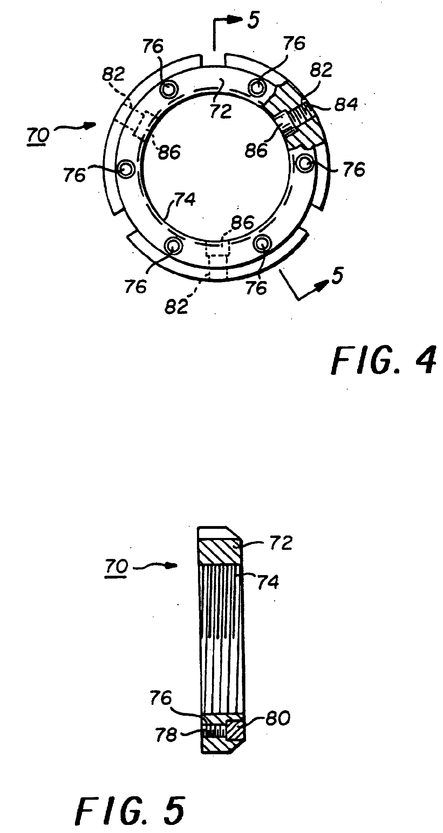

Figures 4 and 5 illustrate the features of lock nut 70. An annular body portion 72 is provided with a central threaded bore 74. Surrounding bore 74 are a plurality circumferentially spaced, threaded through bores 76, each bore 76 extending essentially parallel to the axis of rotation of the nut. In each bore 76 is located a screw 78 which bears upon a metal plug 80 positioned in an unthreaded end portion of bore 76. Preferably, plug 80 is made from a material, such as brass, which is softer than screw 78 and washer 68. At initial installation of lock nut 70, screws 78 are not tightened against plugs 80. Also surrounding bore 74 is a further, conventional plurality of circumferentially spaced, threaded through bores 82, each bore extending essentially radially toward the axis of rotation of the nut. In each bore 82 is located a screw 84 which bears upon a threaded metal shoe 86. Preferably, shoe 86 is made from a material, such as brass, which is softer than the material of shaft extensions 34, 40. After the lock nut has been torqued to the necessary preload, screws 84 are tightened against shoes 86 in the familiar manner to prevent the nut from backing off.

After bearing assemblies 54, 56 have been installed and lock nuts 70 have been torqued to the preload required by the bearing manufacturer, the radial runout of each bearing assembly is measured against an outer cylindrical surface 88 of each housing 58; and the axial runout of each bearing assembly is measured against a radially extended surface 90 of each flange 60. Potential causes for such axial and radial runout can include preload forces of the lock nut, lack of squareness between the faces of the lock nut and the axis of rotation of the bearings and similar factors. In an actual application for rotary tools of the type illustrated, the radial and axial runouts at this point during assembly have been measured in the range of 0.0001 to 0.0002 inch (0.0025 to 0.0050 mm). To reduce this amount of runout, screws 78 were tightened against plugs 80. Those skilled in the art will appreciate that pressure from plugs 80 against washer 68 will cause slight changes in geometry, such as very small deflection of shaft extensions 34, 40, which can be adjusted to reduce the amount of runout measured. In the same actual application, use of the lock nut enabled radial and axial runout to be reduced by about a factor of ten, to less than 0.000040 inch (0.001 mm). In this application, the lock nut had an outer diameter of about 2.25 inch (57.2 mm) and an inner diameter of about 1.5 inch (38.1 mm), with bores 76 set 60' apart. Screws 78 had a diameter of about 0.164 inch (4.17 mm); and plugs 80, a diameter of about 0.188 inch (4.78 mm).

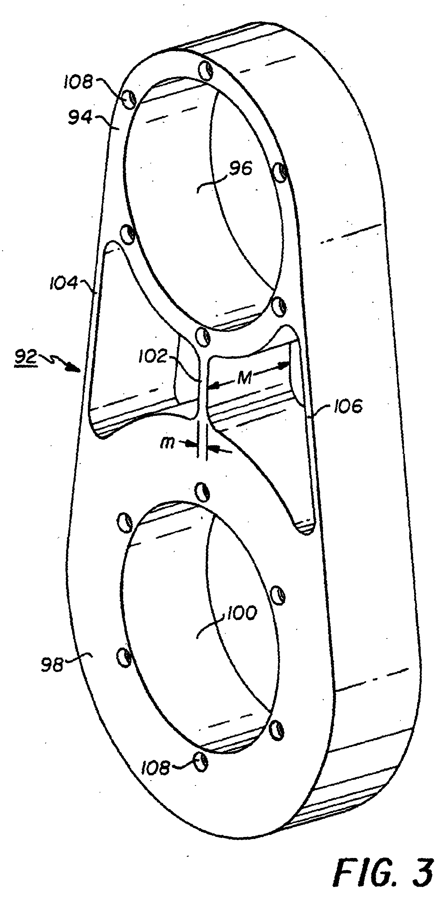

Once lock nuts 70 have been adjusted to produce the desired runout, a constraint member 92 of the invention is installed. As shown in Figure 3, constraint member 92 comprises an upper, cylindrical body portion 94 having a through bore 96 and a lower cylindrical body portion 98 having a through bore 100. Bores 96 and 100 are sized to have a substantial radial clearance of about 0.002 inch (0.051 mm) to outer cylindrical surfaces 88 of bearing housings 58. At least one flexure 102 is extended between body portion 94, 99, in the illustrated embodiment essentially in a plane containing the axes of bores 96, 100. Flexure 102 has a major width dimension M measured essentially parallel to the axes of bores 96, 100 and a minor width dimension m measure essentially transverse to the axes of the bores. A pair of side flexures 104, 106 may be positioned on either side of central flexure 102. Flexures 104, 106 may be angled toward each other, as illustrated, to ease access to the working nip between tools 18, 20.

Those skilled in the art will appreciate, however, that flexures 102, 104, 106 are not limited in geometry and location to the configuration of the illustrated embodiment The geometry and material of the flexures may be chosen as necessary to enable member 92 to serve as a tuned compliance between the cantilever shafts, as suitable for a particular application. The flexures may be designed to produce a desired spring rate in the direction(s) most suitable for a particular rotary tool pair, to withstand the radial and axial run-out forces expected for the particular application. Thus, run-out motion may be limited in accordance with our invention, without adding excessive strain to the shafts or excessive, damaging loads to bearings, tools, cantilever shafts or shaft extensions. Those skilled in the art accordingly will appreciate that the flexures may have various cross sections, such as square, round, oval and the like, or may be built up from several leaves, without departing from the scope of the invention as claimed. As illustrated, constraint member 92 is formed integrally of body portions 94, 98 and flexures 102 - 106. To minimize the weight of the constraint member and to more closely match thermal expansion characteristics of the remainder of the assembly, titanium has been found to be a suitable material.

Constraint member 92 is installed by slipping bores 96, 100 over surfaces 88 of the bearing housings until radial surfaces 90 are contacted. Surrounding each bore is a circumferentially extending array of through bores 108 through which a corresponding plurality of screws 110 extend to engage a corresponding plurality of tapped holes in flanges 60. Sufficient clearance is provided between bores 108 and screws 110 for ease of installation. In some applications, slight movement of constraint member will be observed. Radial movement may be limited, if desired, by means such as a ball and spring plunger 111 installed next to die tool 20, as illustrated schematically in Figure 1.

A constraint member having the illustrated geometry, coupled with bearing assemblies and lock nuts of the types previously described, was effective to reduce radial and axial runout of a tool pair from a range of 0.000460 to 0.000480 inch (0.0117 to 0.0122 mm), to a greatly improved range of 0.000090 to 0.000 115 inch (0.0023 to 0.0029 mm). Consider the case with a Y-axis transverse to the axes of rotation of the tools, an X-axis transverse to the same axes; and a Z-axis parallel to the same axes. In general, constraint systems according to the invention are effective to limit movement of the tools in the Y direction, meaning that good engagement is maintained with the work piece. Some benefit also is realized in the X direction and, to a lesser extent, in the Z direction. Should additional stiffness in the X direction be desired, limited stiffness external braces can be added.

### Parts List

- 10: apparatus embodying the invention
- 12: drive module
- 14: cantilever shaft
- 16: cantilever shaft
- 18: rotary tool
- 20: rotary tool
- 26: work piece, length of photographic film
- 32: threaded hole
- 33: screw
- 34: cantilever shaft extension
- 36: circumferentially and radially extending flange on 34
- 38: tapped hole
- 40: cantilever shaft extension
- 42: circumferentially and radially extending flange on 40
- 44: screw
- 46: central bore in 34
- 48: central bore in 40
- *50*: shoulder on 34
- 52: shoulder on 40
- 54: bearing assembly mounted on 34
- 56: bearing assembly mounted on 40
- 58: cylindrical housing of 54 or 56
- 60: radially and circumferentially extending flange on 58
- 62: duplex bearing within 54 or 56
- 64: retainer ring for outer race of 62
- 66: screw
- 68: hardened washer
- 70: lock nut
- 72: annular body portion of 70
- 74: central threaded bore in 72
- 76: axially extending, threaded through bore in 72
- 78: screw
- 80: brass plug
- 82: radially extending, threaded through bore in 72
- 84: screw
- 86: threaded brass shoe
- 88: outer cylindrical surface of 58
- 90: radially extended surface of 60
- 92: constraint member
- 94: upper, cylindrical body portion
- 96: through bore in 94
- 98: lower, cylindrical body portion
- 100: through bore in 98
- 102: flexure
- *M*: major width dimension of 102
- *m*: minor width dimension of 102
- 104: side flexure
- 106: side flexure
- 108: through bore in 94 or 98
- 110: screw
- 111: ball and spring plunger

While the invention has been shown and described with reference to a particular embodiment thereof, those skilled in the art will understand that other variations in form and detail may be made without departing from the scope of the invention as claimed.

## Claims

1. A constraint system for use in an apparatus including a pair of parallel shafts (14,16) having cantilever portions and a pair of cooperating tools (18,20) each associated with a respective cantilever portion, the shafts being mounted for rotation in the apparatus during use of the tools, the system comprising: an integral tuned compliance member comprised of
a first body portion with a first bore within which a first bearing may be located on one of the shafts (14,16), a second body portion with a second bore within which a second bearing may be located on the other of the shafts, and at least one flexure extended between the first and second body portions, the flexure being effective for limiting deflection of the cantilever portions; and
a lock nut (70) threaded onto an outboard end of each cantilever portion and engaged with a respective bearing, the lock nut including a plurality of circumferentially spaced, threaded through bores (76) essentially parallel to an axis of rotation of the lock nut (70); and a corresponding plurality of screws (78) in the threaded bores (76) for adjusting axial and radial runout, at least one of the screws (78) being adjustably engaged with the respective bearing

2. The system according to Claim 1, wherein the bearings each have an inner race and an outer race and the lock nut engages the inner race.

3. The system according to Claim 1, wherein the lock nut (70) includes a further plurality of circumferentially spaced, threaded through bores (82) extended radially toward the axis of rotation of the lock nut (70); a corresponding further plurality of radially movable, threaded shoes (86); and a corresponding further plurality screws (84) in the further plurality of through bores (82) for pressing the shoes against the cantilever portion.

## Patentansprüche

1. Haltevorrichtung zur Verwendung in einem Gerät mit zwei parallelen Wellen (14, 16), die freitragende Abschnitte und zwei zusammenwirkende, jeweils einem entsprechenden freitragenden Abschnitt zugeordnete Werkzeuge (18, 20) aufweisen und während der Verwendung der Werkzeuge drehbar gelagert sind, **dadurch gekennzeichnet, dass** ein einstückig ausgebildetes, abgestimmtes Federelement vorgesehen ist, bestehend aus
- einem ersten Abschnitt mit einer ersten Bohrung, in der ein erstes Lager auf der einen der Wellen (14, 16) angeordnet ist, einem zweiten Abschnitt mit einer zweiten Bohrung, in der ein zweites Lager auf der anderen der Wellen (14, 16) angeordnet ist, und mindestens einem zwischen dem ersten und zweiten Abschnitt vorgesehenen Biegeelement, welches das Durchbiegen der freitragenden Abschnitte begrenzt, und
- einer Sicherungsmutter (70), die auf ein außen liegendes Ende eines jeden freitragenden Abschnitts aufgeschraubt und mit einem entsprechenden Lager in Eingriff ist, die eine Vielzahl entlang der Umfangsfläche voneinander beabstandeter, mit einem Gewinde versehener Bohrlöcher (76) aufweist, die sich im wesentlichen parallel zu einer Drehachse der Sicherungsmutter (70) erstrecken; und die eine entsprechende Vielzahl von Schrauben (78) in den mit Gewinde versehenen Bohrlöchern (76) umfasst zum Ausgleichen axialer und radialer Unrundheit, wobei mindestens eine der Schrauben (78) mit dem jeweiligen Lager verstellbar in Eingriff ist.

2. Vorrichtung nach Anspruch 1, **dadurch gekennzeichnet, dass** die Lager jeweils einen inneren und einen äußeren Laufring aufweisen und dass die Sicherungsmutter in den inneren Laufring eingreift.

3. Vorrichtung nach Anspruch 1, **dadurch gekennzeichnet, dass** die Sicherungsmutter (70) eine weitere Vielzahl entlang der Umfangsfläche voneinander beabstandeter, mit einem Gewinde versehener Bohrlöcher (82) aufweist, die sich radial zur Drehachse der Sicherungsmutter (70) hin erstrecken, eine entsprechende weitere Vielzahl radial bewegbarer, mit Gewinde versehener Schuhe (86), und eine entsprechende weitere Vielzahl von Schrauben (84) in der weiteren Vielzahl von Bohrlöchern (82) zum Drücken der Schuhe gegen den freitragenden Abschnitt.

## Revendications

1. Système de contrainte destiné à une utilisation dans un appareil comprenant une paire d'arbres parallèles (14, 16) présentant des parties en porte-à-faux et une paire d'outils coopérants (18, 20) associés chacun à une partie en porte-à-faux respective, les arbres étant montés en vue d'une rotation dans l'appareil durant l'utilisation des outils, le système comprenant : un élément de déformation réglé intégré constitué de
une première partie de corps comprenant un premier alésage à l'intérieur duquel un premier palier peut être maintenu en place sur l'un des arbres (14, 16), une seconde partie de corps présentant un second alésage à l'intérieur duquel un second palier peut être maintenu en place sur l'autre des arbres, et au moins une partie de flexion étendue entre les première et seconde parties de corps, la partie de flexion étant efficace pour limiter le fléchissement des parties en porte-à-faux, et
un écrou de verrouillage (70) vissé sur une extrémité extérieure de chaque partie en porte-à-faux et en contact avec un palier respectif, l'écrou de verrouillage comprenant une pluralité d'alésages traversants taraudés espacés suivant la circonférence (76), essentiellement parallèles à un axe de rotation de l'écrou de verrouillage (70), et une pluralité correspondante de vis (78) dans les alésages taraudés (76) destinés à ajuster l'excentricité axiale et radiale, au moins une des vis (78) étant en prise de façon ajustable avec le palier respectif.

2. Système selon la revendication 1, dans lequel les paliers comportent chacun une bague intérieure et une bague extérieure et l'écrou de verrouillage vient en prise avec la bague intérieure.

3. Système selon la revendication 1, dans lequel l'écrou de verrouillage (70) comprend une autre pluralité d'alésages traversants taraudés espacés suivant la circonférence (82) étendus radialement en direction de l'axe de rotation de l'écrou de verrouillage (70), une autre pluralité correspondante de patins filetés mobiles radialement (86), et une autre pluralité correspondante de vis (84) dans l'autre pluralité d'alésages traversants (82) destinés à presser les patins contre la partie en porte-à-faux.
